# EUROPÄISCHE PATENTSCHRIFT

(11) **EP 3 029 302 B1**
(45) Veröffentlichungstag und Bekanntmachung des Hinweises auf die Patenterteilung: **11.10.2017**
(21) Anmeldenummer: 15002294.5
(22) Anmeldetag: 01.08.2015
(51) Int. Cl.: F02D 41/18, F02D 41/00, G01F 1/72, G01F 15/02, G01F 1/696

(54) **VERFAHREN UND VORRICHTUNG ZUR PULSATIONSKORREKTUR EINES AUSGANGSSIGNALS EINES LUFTMASSENSENSORS**
METHOD AND APPARATUS FOR THE PULSATION CORRECTION OF AN OUTPUT SIGNAL OF AN AIR-FLOW SENSOR
PROCEDE ET DISPOSITIF DE CORRECTION D'IMPULSIONS D'UN SIGNAL DE SORTIE D'UN CAPTEUR DE DEBIT D'AIR

(30) Priorität: 13.11.2014 DE 102014016782
(43) Veröffentlichungstag der Anmeldung: 08.06.2016
(73) Patentinhaber: MAN Truck & Bus AG, 80995 München (DE)
(72) Erfinder: Sauter, Hans, 90518 Altdorf (DE); Reitz, Vanessa, 90431 Nürnberg (DE)
(74) Vertreter: v. Bezold & Partner Patentanwälte - PartG mbB

(56) Entgegenhaltungen:
- EP-A2- 2 703 626
- FR-A1- 2 854 435
- JP-A- 2006 226 122
- US-A- 5 191 789

## Beschreibung

Die Erfindung betrifft ein Verfahren zur Pulsationskorrektur eines Ausgangssignals eines Luftmassensensors nach dem Oberbegriff des Anspruchs 1. Die Erfindung betrifft ferner eine Vorrichtung, die eingerichtet ist, das erfindungsgemäße Verfahren durchzuführen.

Zur richtigen Gemischaufbereitung benötigen Kraftstoffzumesssysteme eine genaue Information über die von der Brennkraftmaschine je Hub angesaugte Luftmasse. Diese Informationen erhalten sie über schnell ansprechende Luftmassensensoren, die beispielsweise nach dem Heißfilmprinzip arbeiten. Durch die hohe Ansprechgeschwindigkeit folgt das Ausgangssignal des Luftmassensensors jeder Pulsation im Luftstrom. Auch rückströmende Luftmassen werden - allerdings mit falschem Vorzeichen - erfasst. Sobald solche Pulsationen auftreten, liefert daher der Luftmesser keine korrekten Messwerte mehr, die für die Gemischaufbereitung verwendbar wären.

Die JP-A-56107124 offenbart ein Verfahren zur Ermittlung von Luftwerten zur Gemischaufbereitung einer Brennkraftmaschine mittels eines Luftmassensensors. Bei dem Verfahren werden Verfälschungen durch Pulsationen umgangen, indem auf Ersatzwerte umgeschaltet wird, wenn die aus den Pulsationen resultierenden Messwertschwankungen über einem bestimmten Schwellwert liegen und sich die Brennkraftmaschine im Volllastbetrieb befindet. Die Ersatzwerte werden arithmetisch aus dem verfälschten Messwert und der Größe der Messwertschwankungen berechnet.

Die DE-A-33 44 276 offenbart ein weiteres Verfahren zur Korrektur von Messwerten des Luftmassenstroms oder einer Basiseinspritzzeit in Abhängigkeit von der Höhe der Pulsation, der Drehzahl und dem Betriebszustand einer Brennkraftmaschine. Die Korrektur erfolgt aber nur, wenn der Öffnungswinkel der Drosselklappe größer ist als ein vorgegebener Winkel, so dass sich die Brennkraftmaschine im Volllastbereich befindet und die Brennkraftmaschine einen stationären Betriebszustand aufweist.

Die Druckschrift US 5,191,789 A offenbart ein Verfahren zur Korrektur eines Ausgangssignals eines Luftmassensensors, wobei ein Korrekturfaktor basierend auf dem absoluten Level eines Verdichtungsdrucks P verwendet wird. Dies wird vorgeschlagen, um das Ausgangssignal des Luftmassensensors in einem transienten Betriebszustand zu korrigieren. Die Druckschrift FR 2 854 435 offenbart die Verwendung von einem Verdichtungsverhältnis und einem Expansionsverhältnis für die Bestimmung des Abgasmassenstroms. Aus der Praxis ist ferner bekannt, das Roh-Luftmassensignal des Luftmassensensors, das aus einem linearisierten und gefilterten Rohsignal des Luftmassensensors gewonnen wird, mit Hilfe eines Pulsationskorrekturfaktors zu korrigieren. Hierbei wird der Pulsationskorrekturfaktor über ein Basis-Korrekturkennfeld, welches über Drehzahl und Einspritzmenge bzw.

Drehzahl und Drehmoment aufgespannt ist, ermittelt. Da sich bei einer aufgeladenen Verbrennungskraftmaschine das Pulsationsverhalten bei gleichbleibender Drehzahl und gleichbleibender Einspritzmenge bzw. Drehzahl verändern kann, muss mit Hilfe von weiteren Korrekturfaktoren die Basiskorrektur korrigiert werden. Zur Korrektur werden die Position des Abgasrückführungs(AGR)-Stellers und die Position der Drosselklappe herangezogen. Die Korrekturen werden entweder mittels einer von der jeweiligen Stellerposition abhängigen Interpolation von Kennfeldern oder durch Skalierung des Einflusses der AGR-Stellerposition und der Drosselklappe mittels eines Kennfeldes berechnet. Zur weiteren Steigerung der Genauigkeit werden für die verschiedenen Betriebszustände der Verbrennungskraftmaschine wie Normalbetrieb, Heizen des Diesel-Partikelfilters, Heizen für die selektive katalytische Reduktion (SCR) etc. unterschiedliche Kennfelder verwendet.

Nachteilig an den bekannten Pulsationskorrekturverfahren ist, dass diese nicht in allen Betriebssituationen des Fahrzeugs die Bestimmung eines genauen Luftmassenwerts ermöglichen und sich die Genauigkeit über die Lebensdauer des Fahrzeugs oftmals verändert und folglich Nachkalibrierungen erforderlich sind. Ein weiterer Nachteil bekannter Pulsationskorrekturverfahren ist, dass diese aufwändig sind, da für unterschiedliche Betriebszustände der Verbrennungskraftmaschine unterschiedliche Kennfelder hinterlegt werden müssen und neben den Größen für die Basiskorrektur weitere Korrekturgrößen, z. B. die Stellerposition, erforderlich sind.

Es ist somit eine Aufgabe der Erfindung, ein verbessertes Pulsationskorrekturverfahren bereitzustellen, mit dem Nachteile herkömmlicher Techniken vermieden werden können. Die Aufgabe der Erfindung ist es insbesondere, ein Pulsationskorrekturverfahren bereitzustellen, dessen Genauigkeit über die Lebensdauer der Verbrennungskraftmaschine im Wesentlichen konstant bleibt und das sich durch eine vereinfachte Verfahrensführung auszeichnet.

Diese Aufgaben werden durch ein Verfahren mit den Merkmalen des Hauptanspruchs und durch eine Vorrichtung mit den Merkmalen des nebengeordneten Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Verfahren zur Pulsationskorrektur ist zur Korrektur eines Ausgangssignals eines Luftmassensensors einsetzbar, der zur Luftmassenerfassung der Verbrennungsluft einer aufgeladenen Brennkraftmaschine, d. h. einer Brennkraftmaschine mit Abgasturbolader, eingesetzt wird. Der Luftmassensensor liefert Messwerte, die durch einen in einem Ansaugrohr der aufgeladenen Brennkraftmaschine pulsierenden Luftstrom bestimmt sind, insbesondere zur Luftmassenerfassung der Verbrennungsluft einer Brennkraftmaschine für ein Kraftfahrzeug, vorzugsweise ein Nutzfahrzeug.

Gemäß allgemeinen Gesichtspunkten der Erfindung wird zur Korrektur des Ausgangssignals des Luftmassensensors auf Pulsationseffekte ein erster Korrekturfaktor verwendet, der in Abhängigkeit von einem Verdichtungsverhältnis eines Verdichters eines Abgasturboladers ermittelt wird. Das Verdichtungsverhältnis des Verdichters ergibt sich aus dem Verhältnis aus Ansaugdruck vor dem Verdichter und dem Ladeluftdruck nach dem Verdichter. Der erste Korrekturfaktor ist vorzugsweise ein multiplikativer Korrekturfaktor. Der erste Korrekturfaktor kann jedoch auch als additiver Korrekturfaktor verwendet werden.

Hierbei ist zu erwähnen, dass von den Erfindern im Rahmen von Prüfstandsmessungen festgestellt wurde, dass das Verdichtungsverhältnis des Verdichters des Abgasturboladers eine physikalische Größe darstellt, die die Pulsation maßgeblich beeinflusst, und dass bei Verwendung des Verdichtungsverhältnisses zur Pulsationskorrektur auf weitere Korrekturen durch Stellerpositionen etc. verzichtet werden kann. Ein weiterer Vorteil ist, dass dadurch die Genauigkeit des erfindungsgemäßen Korrekturverfahrens über die Lebensdauer der Verbrennungskraftmaschine konstant bleibt. Ein weiterer Vorzug der Erfindung liegt darin, dass die Korrektur für alle Betriebszustände der Verbrennungskraftmaschine gültig ist und somit eine Betriebsarten-abhängige Umschaltung von Kennfeldern nicht notwendig ist. Die Kalibrierung muss nur einmalig durchgeführt werden.

Zur Pulsationskorrektur wird ferner ein zweiter Korrekturfaktor verwendet, der in Abhängigkeit von einem Expansionsverhältnis der Turbine des Abgasturboladers ermittelt wird. Dadurch kann die Genauigkeit der Pulsationskorrektur weiter verbessert werden. Dies ist besonders vorteilhaft bei der Verwendung von Abgasturboladern mit variabler Turbinengeometrie. Das Expansionsverhältnis der Turbine des Abgasturboladers ergibt sich aus dem Verhältnis aus Abgasdruck vor der Turbine und dem Auslassdruck der Turbine.

Gemäß einer Ausgestaltungsform der Erfindung wird in Übereinstimmung mit dem Stand der Technik ein Luftmassen-Rohsignal aus dem elektrischen Ausgangssignal bzw. Rohsignal des Luftmassensensors bestimmt und anschließend das bestimmte Luftmassen-Rohsignal auf Pulsationseffekte hin korrigiert. Die Bestimmung des Luftmassen-Rohsignals aus dem Ausgangssignal bzw. Rohsignal des Luftmassensensors erfolgt in an sich bekannter Weise, abhängig von der Bauart des Luftmassensensors. Hierbei wird beispielsweise ein Strom- und/oder Spannungs-Rohsignal des Luftmassensensors, der z. B. nach dem Prinzip eines Hitzdrahtanemometers arbeiten kann, mittels einer hinterlegten Konversionskurve linearisiert und über einen oder mehrere Filter aufbereitet, um ein Luftmassen-Rohsignal zu erhalten. Das Luftmassen-Rohsignal gibt dann eine Masse der pro Zeiteinheit durchströmenden Luft (den Massenstrom) an, ist aber noch nicht korrigiert, um evtl. auftretende Pulsationen im Luftstrom, die zu verfälschten Messwerten führen, zu berücksichtigen.

Gemäß dieser Ausgestaltungsform wird der erste Korrekturfaktor in Abhängigkeit von dem Luftmassen-Rohsignal und von dem aktuellen Verdichtungsverhältnis eines Verdichters eines Abgasturboladers ermittelt. Eine vorteilhafte Möglichkeit der erfindungsgemäßen Realisierung sieht hierbei vor, dass der erste Korrekturfaktor in einem ersten Pulsationskorrekturkennfeld abgelegt ist, das als erste Eingangsgröße das Luftmassen-Rohsignal und als zweite Eingangsgröße das Verdichtungsverhältnis des Verdichters des Abgasturboladers hat.

Bei einer vorteilhaften Variante dieser Ausgestaltungsform wird zusätzlich der zweite Korrekturfaktor zur Pulsationskorrektur verwendet, der in Abhängigkeit von einem Abgasmassenstrom und dem Expansionsverhältnis der Turbine des Abgasturboladers ermittelt wird. Der zweite Korrekturfaktor kann in einem zweiten Pulsationskorrekturkennfeld abgelegt sein, das als erste Eingangsgröße den Abgasmassenstrom und als zweite Eingangsgröße das Expansionsverhältnis der Turbine des Abgasturboladers hat.

Zur Pulsationskorrektur werden vorzugsweise wiederum aktuelle Werte des Verdichtungsverhältnisses, des Expansionsverhältnisses, des Luftmassen-Rohsignals und des Abgasmassenstroms bestimmt und verwendet. Der Abgasmassenstrom kann beispielsweise in an sich bekannter Weise aus dem Luftmassen-Rohsignal und einer aktuellen Kraftstoffeinspritzmenge der Brennkraftmaschine berechnet werden.

Gemäß einer weiteren Ausgestaltungsform der Erfindung wird direkt das Ausgangssignal des Luftmassensensors, d. h. das Rohsignal des Luftmassensensors, das noch nicht in einen Massenstrom umgerechnet wurde, unter Verwendung zumindest des ersten Korrekturfaktors korrigiert und anschließend das korrigierte Ausgangssignal in ein Luftmassen-Rohsignal umgewandelt. Hierbei besteht wieder die Möglichkeit, den Korrekturfaktor in einem entsprechenden Pulsationskorrekturkennfeld zu hinterlegen, das als erste Eingangsgröße das elektrische Ausgangssignal des Luftmassensensors und als zweite Eingangsgröße das Verdichtungsverhältnis des Verdichters des Abgasturboladers hat. Gemäß einer Variante dieser weiteren Ausgestaltungsform besteht im Rahmen der Erfindung wiederum die Möglichkeit, zur Pulsationskorrektur zusätzlich noch den zweiten Korrekturfaktor zu verwenden, der in Abhängigkeit von einem Expansionsverhältnis der Turbine des Abgasturboladers ermittelt wird.

Ferner sind vorzugsweise bei den vorstehend beschriebenen Varianten sowohl der erste Korrekturfaktor als auch der zweite Korrekturfaktor multiplikative Korrekturfaktoren, wobei auch hier wieder die Möglichkeit besteht, diese als additive Korrekturfaktoren auszulegen.

Zur weiteren Erhöhung der Genauigkeit der Pulsationskorrektur kann ein Verdichterkorrekturfaktor verwendet werden, dessen Wert in Abhängigkeit von einem aktuellen Verdichterbetriebszustand festgelegt wird, um Einflüsse des Verdichterbetriebszustands auf die Pulsation zu berücksichtigten, die nicht von dem Verdichtungsverhältnis herrühren. Der Verdichterkorrekturfaktor kann beispielsweise zur Korrektur des Luftmassen-Rohsignals verwendet werden. Ferner kann ein Turbinenkorrekturfaktor verwendet werden, dessen Wert in Abhängigkeit von einer Temperatur des Abgasmassenstroms und/oder in Abhängigkeit von einem Öffnungszustand einer Turbine des Abgasturboladers, falls die Turbinengeometrie variabel einstellbar ist, festgelegt wird. Der Turbinenkorrekturfaktor kann beispielsweise zur Korrektur des Abgasmassenstroms verwendet werden.

Die Erfindung betrifft ferner eine Vorrichtung zur Pulsationskorrektur eines Ausgangssignals eines Luftmassensensors zur Luftmassenerfassung der Verbrennungsluft einer aufgeladenen Brennkraftmaschine, wobei die Vorrichtung eingerichtet ist, ein Ausgangssignal des Luftmassensensors zu empfangen. Gemäß allgemeinen Gesichtspunkten der Erfindung ist die Vorrichtung zur Korrektur des Ausgangssignals auf Pulsationseffekte eingerichtet, das Verfahren wie hierin offenbart durchzuführen.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Verfahrensmerkmale gelten somit auch für eine Vorrichtung, die z. B. entsprechend programmtechnisch eingerichtet ist. Die zuvor beschriebenen bevorzugten Ausführungsformen und Merkmale der Erfindung sind beliebig miteinander kombinierbar.

Weitere Einzelheiten und Vorteile der Erfindung werden im Folgenden unter Bezug auf die beigefügten Zeichnungen beschrieben. Es zeigen:
- Figur 1A: eine vereinfachte Darstellung der Verfahrensschritte der Erfindung;
- Figur 1B: eine vereinfachte schematische Darstellung einer Vorrichtung zur Pulsationskorrektur gemäß einer Ausgestaltungsform der Erfindung;
- Figur 2: eine Bestimmung eines Luftmassen-Rohsignals;
- Figur 3: eine Pulsationskorrektur gemäß einer Ausgestaltungsform der Erfindung; und
- Figur 4: eine Pulsationskorrektur gemäß einer weiteren Ausgestaltungsform der Erfindung.

Gleiche oder funktional äquivalente Elemente und Signale sind in allen Figuren mit denselben Bezugszeichen bezeichnet.

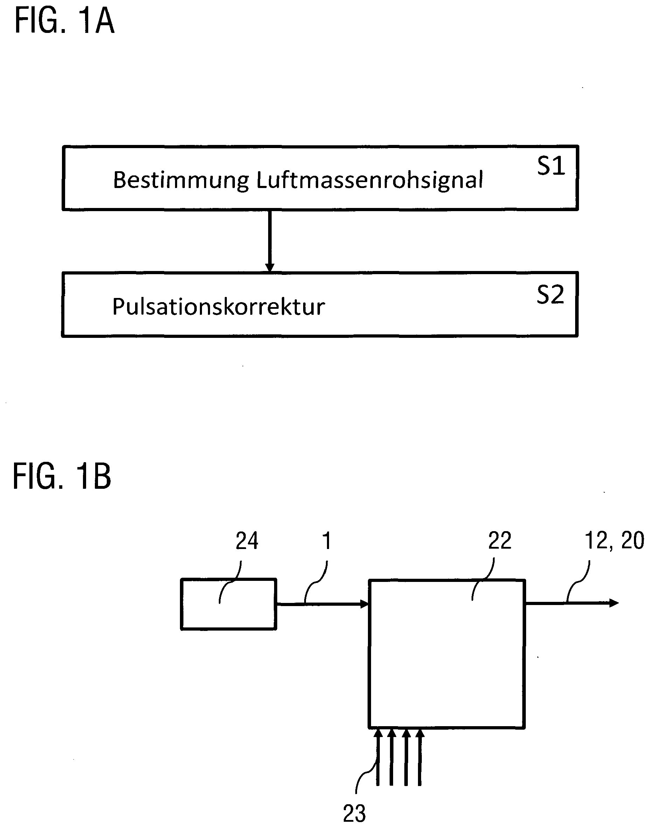

Figur 1 zeigt in einer stark vereinfachten Darstellung ein Ablaufdiagramm eines Verfahrens zur Pulsationskorrektur eines Ausgangssignals eines Luftmassensensors zur Luftmassenerfassung der Verbrennungsluft einer aufgeladenen Brennkraftmaschine. Das Verfahren umfasst die Verfahrensschritte der Bestimmung eines Luftmassen-Rohsignals aus dem Ausgangssignal des Luftmassensensors (Schritt S1) und des Korrigierens des Luftmassen-Rohsignals auf Pulsationseffekte (Schritt S2).

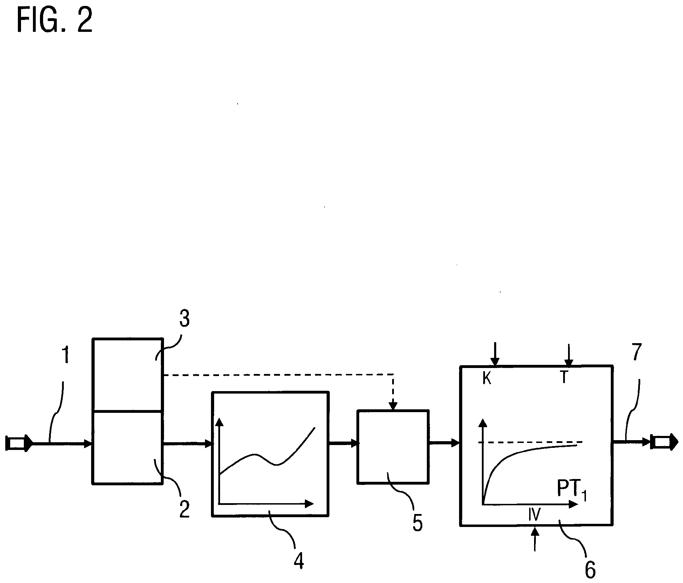

Die Bestimmung eines Luftmassen-Rohsignals aus dem Ausgangssignal des Luftmassensensors gemäß Schritt S1 ist in Figur 2 detaillierter dargestellt. Es wurde bereits vorstehend erwähnt, dass die Bestimmung eines Luftmassen-Rohsignals aus dem Ausgangssignal bzw. Rohsignal des Luftmassensensors an sich bereits aus dem Stand der Technik bekannt ist und daher an dieser Stelle nur kurz beschrieben wird. Ein Rohsignal 1 in Form von Strommesswerten eines nach dem Heißfilmprinzip arbeitenden Luftmassensensors (Hitzdraht-Sensor) wird in einem ersten Verarbeitungsschritt abgetastet (gesampled), anschließend mittels einer Konversionskurve 4 linearisiert und dann einer gleitenden Mittelung (engl. sliding window averaging) 5 unterzogen, wobei Segmentinformationen 3 aus dem ersten Verarbeitungsschritt verwendet werden, was durch die gestrichelte Linie dargestellt ist. Das hierdurch erhaltene Signal wird über einen oder mehrere Filter 6 aufbereitet, um ein Luftmassen-Rohsignal 7 zu erhalten.

Es wird betont, dass die vorstehende Beschreibung lediglich beispielhaft eine Bestimmung des Luftmassen-Rohsignals angibt und im Rahmen der Erfindung andere bekannte Ansätze verwendet werden können, um aus den gemessen elektrischen Größen des Luftmassensensors ein Luftmassenrohsignal zu bestimmen.

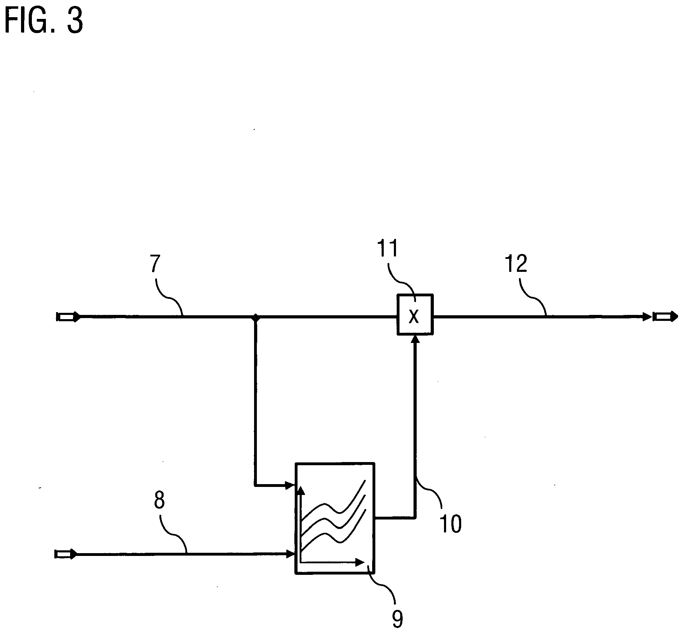

Figur 3 erläutert eine Pulsationskorrektur (Schritt S2) gemäß einer Ausgestaltungsform der Erfindung.

Um die durch eine evtl. auftretende Pulsation im Luftstrom verfälschten Messwerte des Luftmassenrohsignals 7 zu korrigieren, wird ein erster Korrekturfaktor 10 verwendet, der in Abhängigkeit von dem Luftmassen-Rohsignal 7 und von einem Verdichtungsverhältnis 8 eines Verdichters eines Abgasturboladers ermittelt wird. Der erste Korrekturfaktor 10 ist in einem ersten Pulsationskorrekturkennfeld 9 abgelegt, das als erste Eingangsgröße das Luftmassen-Rohsignal 7 und als zweite Eingangsgröße das Verdichtungsverhältnis 8 des Verdichters des Abgasturboladers hat. Aus diesen beiden Eingangsgrößen 7 und 8 ergibt sich der erste Pulsationskorrekturfaktor 10. Dieser wird mit dem Luftmassen-Rohsignal 7 multipliziert und ergibt das auf Pulsationseffekte korrigierte Luftmassensignal 12. Der Pulsationskorrekturfaktor 10 ist somit ein multiplikativer Korrekturfaktor, was durch die mit dem Bezugszeichen 11 gekennzeichnete Multiplikationsoperation dargestellt ist. Das Verdichtungsverhältnis des Verdichters ergibt sich aus dem Verhältnis aus Ansaugdruck vor dem Verdichter und dem Ladeluftdruck nach dem Verdichter und kann aus modellierten oder berechneten Signalen, die den Ansaugdruck vor dem Verdichter und den Ladeluftdruck nach dem Verdichter angeben, berechnet werden.

Das Pulsationskorrekturkennfeld 9 kann empirisch für verschiedene Brennkraftmaschinen auf einem Prüfstand ermittelt werden, wobei ein mittels eines labortechnischen Messgeräts bestimmtes Referenzluftmassensignal mit dem Luftmassen-Rohsignal 7 für verschieden Betriebszustände, insbesondere verschiedene Verdichtungsverhältnisse, verglichen wird. Aus den ermittelten Vergleichsdaten kann dann das Pulsationskorrekturfeld 9 bestimmt werden.

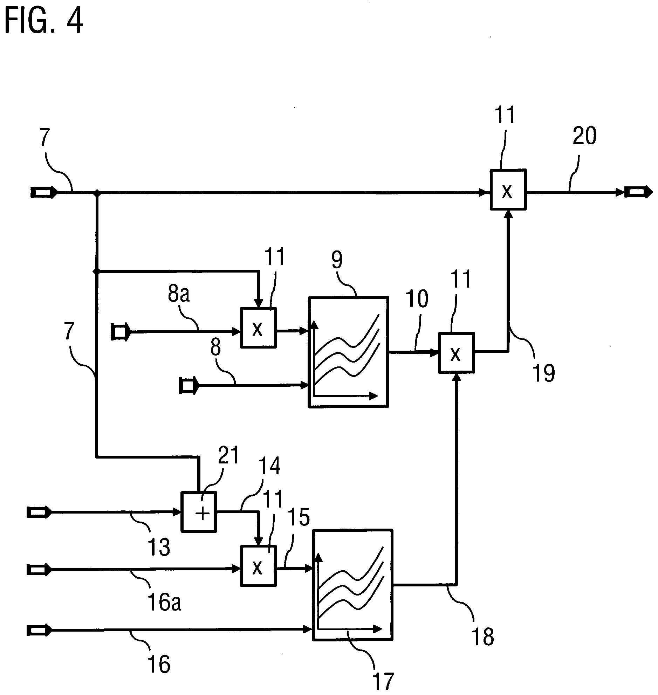

In Figur 4 ist eine Pulsationskorrektur (Schritt S2) gemäß einer weiteren Ausgestaltungsform der Erfindung erläutert. Hierbei wird wiederum der erste Korrekturfaktor 10 verwendet, der in Abhängigkeit von dem aktuellen Luftmassen-Rohsignal 7 und von einem aktuellen Verdichtungsverhältnis 8 eines Verdichters eines Abgasturboladers ermittelt wird. Optional kann das das Luftmassen-Rohsignal 7 mit einem Verdichterkorrekturfaktor 8a multipliziert werden, dessen Wert in Abhängigkeit von einem aktuellen Verdichterbetriebszustand festgelegt wird.

Dadurch können Einflüsse des Verdichterbetriebszustands auf die Pulsation berücksichtigt werden, die nicht von dem Verdichtungsverhältnis herrühren. Der erste Korrekturfaktor 10 ist wiederum in dem Pulsationskorrekturkennfeld 9 abgelegt, das als erste Eingangsgröße das Luftmassen-Rohsignal 7 und als zweite Eingangsgröße das Verdichtungsverhältnis 8 des Verdichters des Abgasturboladers hat.

Die Besonderheit dieser Ausführungsvariante liegt darin, dass zur Korrektur des Luftmassen-Rohsignals 7 ein zweiter Korrekturfaktor 18 verwendet wird, der in Abhängigkeit von einem aktuellen Abgasmassenstrom 14 und einem aktuellen Expansionsverhältnis 16 der Turbine des Abgasturboladers ermittelt wird. Hierbei ist der zweite Korrekturfaktor 18 ebenfalls in einem Pulsationskorrekturkennfeld 17 abgelegt ist, das als erste Eingangsgröße den Abgasmassenstrom 14 und als zweite Eingangsgröße das Expansionsverhältnis 16 der Turbine des Abgasturboladers hat. Das Expansionsverhältnis der Turbine des Abgasturboladers ergibt sich aus dem Verhältnis aus Abgasdruck vor der Turbine und dem Auslassdruck der Turbine. Das Pulsationskorrekturkennfeld 17 kann wiederum empirisch für verschiedene Brennkraftmaschinen auf einem Prüfstand, analog wie zuvor für das erste Pulsationskorrekturkennfeld 9 beschrieben, ermittelt werden. Die Variante ermöglicht eine weitere Steigerung der Genauigkeit der Pulsationskorrektur, insbesondere bei der Verwendung von Abgasturboladern mit variabler Turbinengeometrie. Der Abgasmassensignal 14 wird additiv aus dem Luftmassen-Rohsignal 7 und einer aktuellen Kraftstoffeinspritzmenge 13 der Brennkraftmaschine berechnet. Dies ist durch die mit dem Bezugszeichen 21 gekennzeichnete Additions-Verarbeitung gekennzeichnet.

Optional kann ein Turbinenkorrekturfaktor 16a verwendet werden, der bei einer Turbine mit variabler Turbinengeometrie zur Korrektur des Einflusses des Öffnungszustands der Turbine auf die Pulsation der Verbrennungsluft oder zur Temperaturkorrektur des Abgasmassenstroms verwendet werden kann. Der Korrekturfaktor kann hierfür in Abhängigkeit von einer Temperatur des Abgasmassenstroms vor der Turbine (hierfür kann auch ein Modellwert verwendet werden) und/oder in Abhängigkeit von einem Öffnungszustand einer Turbine des Abgasturboladers, falls die Turbinengeometrie variabel einstellbar ist, festgelegt werden.

Das Expansionsverhältnis der Turbine des Abgasturboladers ergibt sich aus dem Verhältnis aus Abgasdruck vor der Turbine und dem Auslassdruck der Turbine.

Die beiden ermittelten Korrekturfaktoren 10 und 18 werden anschließend miteinander multipliziert und der resultierende Gesamtkorrekturfaktor 19 dann mit dem Luftmassen-Rohsignal 7 multipliziert, um das korrigierte Luftmassensignal 20 zu erhalten.

Wie vorstehend bereits erwähnt, besteht gemäß einer alternativen, nicht dargestellten Ausführungsform die Möglichkeit, das Ausgangssignal 1 direkt in die Pulsationskorrekturkennfelder einzuspeisen. Die Ausgangsgröße aus mindestens einem der Pulsationskennfelder ist dann ein korrigiertes, ungefiltertes Luftmassensignal. Die bekannten Filterungen können anschließend auf das ungefilterte Luftmassensignal angewendet werden.

Wie vorstehend bereits erwähnt, ermöglicht das vorgeschlagene Pulsationskorrekturverfahren unter Verwendung des Verdichtungsverhältnisses des Verdichters des Abgasturboladers eine besonders genaue und für alle Betriebszustände der Verbrennungskraftmaschine gültige Pulsationskorrektur, so dass auf weitere Korrekturen durch Stellerpositionen etc. verzichtet werden kann. Ein weiterer Vorteil ist, dass dadurch die Genauigkeit des erfindungsgemäßen Korrekturverfahrens über die Lebensdauer der Verbrennungskraftmaschine konstant bleibt.

Figur 1B zeigt eine vereinfachte schematische Darstellung einer Vorrichtung 22 zur Pulsationskorrektur gemäß einer Ausgestaltungsform der Erfindung. Die Vorrichtung kann als eigenständige Korrektureinheit oder als Teil eines Motorsteuergeräts ausgeführt sein. Die Vorrichtung 22 ist eingerichtet, ein Ausgangssignal 1 des Luftmassensensors 24 zu empfangen. Die Vorrichtung ist ferner eingerichtet, über die Eingangssignalleitungen 23, z. B. über den CAN-Datenbus, weitere Parameter und Messwerte zu empfangen, die die zuvor beschriebenen Größen 8, 13, 16 oder Größen, aus denen die Größen 8, 13, 16 berechenbar sind, enthalten. In der Vorrichtung sind ferner die Pulsationskorrekturkennfelder 9 und 17 hinterlegt, und die Vorrichtung ist eingerichtet, die Signalverarbeitung, wie in den Figuren 2 bis 4 beschrieben, zur Pulsationskorrektur durchzuführen.

### Bezugszeichenliste

- 1: Ausgangssignal Luftmassensensor
- 2: Abgetastete Rohmesswerte
- 3: Segmentinformationen
- 4: Konversionskurve
- 5: Gleitende Mittelung
- 6: Filterverarbeitung
- 7: Luftmassen-Rohsignal
- 8: Verdichtungsverhältnis
- 8a: Verdichterkorrekturfaktor
- 9: Erstes Pulsationskorrekturkennfeld
- 10: Erster Korrekturfaktor
- 11: Multiplikationsverarbeitung
- 12: Korrigiertes Luftmassensignal
- 13: Kraftstoffeinspritzmenge
- 14: Abgasmassensignal
- 15: Korrigiertes Abgasmassensignal
- 16: Expansionsverhältnis
- 16a: Turbinenkorrekturfaktor
- 17: Zweites Pulsationskorrekturkennfeld
- 18: Zweiter Korrekturfaktor
- 19: Korrekturfaktor
- 20: Korrigiertes Luftmassensignal
- 21: Additive Verarbeitung
- 22: Vorrichtung zur Pulsationskorrektur
- 23: Eingangssignale
- 24: Luftmassensensor

## Patentansprüche

1. Verfahren zur Pulsationskorrektur eines Ausgangssignals (1) eines Luftmassensensors (24) zur Luftmassenerfassung der Verbrennungsluft einer aufgeladenen Brennkraftmaschine, **dadurch gekennzeichnet,**
**dass** zur Korrektur des Ausgangssignals (1) des Luftmassensensors (24) auf Pulsationseffekte
a) ein erster Korrekturfaktor (10) verwendet wird, der in Abhängigkeit von einem Verdichtungsverhältnis (8) eines Verdichters eines Abgasturboladers ermittelt wird, wobei sich das Verdichtungsverhältnis (8) aus dem Verhältnis aus Ansaugdruck vor dem Verdichter und dem Ladeluftdruck nach dem Verdichter ergibt, und
b) ein zweiter Korrekturfaktor (18) verwendet wird, der in Abhängigkeit von einem Expansionsverhältnis (16) einer Turbine des Abgasturboladers ermittelt wird, wobei sich das Expansionsverhältnis aus dem Verhältnis aus Abgasdruck vor der Turbine und dem Auslassdruck der Turbine ergibt.

2. Verfahren nach Anspruch 1, **dadurch gekennzeichnet,**
(a) **dass** zur Pulsationskorrektur des Ausgangssignals (1) des Luftmassensensors (24) ein Luftmassen-Rohsignal (7) aus dem Ausgangssignal (1) des Luftmassensensors (S1) bestimmt wird (S1) und anschließend das bestimmte Luftmassen-Rohsignal auf Pulsationseffekte unter Verwendung des ersten Korrekturfaktors korrigiert wird (S2); und
(b) **dass** der erste Korrekturfaktor (10) in Abhängigkeit von dem Luftmassen-Rohsignal (7) und von dem Verdichtungsverhältnis (8) des Verdichters ermittelt wird und in einem ersten Pulsationskorrekturkennfeld (9) abgelegt ist, das als erste Eingangsgröße das Luftmassen-Rohsignal (7) und als zweite Eingangsgröße das Verdichtungsverhältnis (8) des Verdichters hat.

3. Verfahren nach Anspruch 2, **dadurch gekennzeichnet, dass** der zweite Korrekturfaktor (18) in Abhängigkeit von einem Abgasmassenstrom (14) und einem Expansionsverhältnis (16) der Turbine des Abgasturboladers ermittelt wird und in einem zweiten Pulsationskorrekturkennfeld (17) abgelegt ist, das als erste Eingangsgröße den Abgasmassenstrom (14) und als zweite Eingangsgröße das Expansionsverhältnis (16) der Turbine des Abgasturboladers hat.

4. Verfahren nach Anspruch 3, **dadurch gekennzeichnet, dass** der Abgasmassenstrom (14) aus dem Luftmassen-Rohsignal (7) und einer aktuellen Kraftstoffeinspritzmenge (13) der Brennkraftmaschine berechnet wird.

5. Verfahren nach Anspruch 1, **dadurch gekennzeichnet,**
(a) **dass** zur Pulsationskorrektur das Ausgangssignal (1) des Luftmassensensors (24) unter Verwendung des ersten Korrekturfaktors korrigiert wird (S2) und das korrigierte Ausgangssignal anschließend in ein Luftmassen-Rohsignal umgewandelt wird; und
(b) **dass** der erste Korrekturfaktor in einem dritten Pulsationskorrekturkennfeld abgelegt ist, das als erste Eingangsgröße das elektrische Ausgangssignal des Luftmassensensors (24) und als zweite Eingangsgröße das Verdichtungsverhältnis (8) des Verdichters des Abgasturboladers hat.

6. Verfahren nach einem der vorherigen Ansprüche, **dadurch gekennzeichnet, dass** der erste Korrekturfaktor (10) ein multiplikativer Korrekturfaktor ist.

7. Verfahren nach einem der vorherigen Ansprüche, **dadurch gekennzeichnet, dass** der zweite Korrekturfaktor (18) ein multiplikativer Korrekturfaktor ist.

8. Verfahren nach einem der vorherigen Ansprüche, **dadurch gekennzeichnet, dass** zur Pulsationskorrektur
(a) ein Verdichterkorrekturfaktor (8a) verwendet wird, dessen Wert in Abhängigkeit von einem aktuellen Verdichterbetriebszustand festgelegt wird, um Einflüsse des Verdichterbetriebszustands auf die Pulsation zu berücksichtigten, die nicht von dem Verdichtungsverhältnis herrühren; und/oder
(b) ein Turbinenkorrekturfaktor (16a) verwendet wird, dessen Wert in Abhängigkeit von einer Temperatur des Abgasmassenstroms und/oder in Abhängigkeit von einem Öffnungszustand einer Turbine des Abgasturboladers, falls die Turbinengeometrie variabel einstellbar ist, festgelegt wird.

9. Vorrichtung (22) zur Pulsationskorrektur eines Ausgangssignals (1) eines Luftmassensensors (24) zur Luftmassenerfassung der Verbrennungsluft einer aufgeladenen Brennkraftmaschine, wobei die Vorrichtung (22) eingerichtet ist, ein Ausgangssignal (1) des Luftmassensensors zu empfangen, **dadurch gekennzeichnet, dass** die Vorrichtung zur Korrektur des Ausgangssignals (1) auf Pulsationseffekte eingerichtet ist, das Verfahren gemäß einem der Ansprüche 1 bis 8 durchzuführen.

10. Kraftfahrzeug, insbesondere Nutzfahrzeug, aufweisend eine aufgeladene Brennkraftmaschine und eine Vorrichtung (22) nach Anspruch 9.

## Claims

1. Method for pulsation correction of an output signal (1) of an air mass sensor (24) for air mass detection of the combustion air of a supercharged internal combustion engine, **characterized in that** for correction of the output signal (1) of the air mass sensor (24) for pulsation effects
a) a first correction factor (10) is used that is determined depending on a compression ratio (8) of a compressor of an exhaust gas turbocharger, wherein the compression ratio (8) is given by the ratio of the induction pressure upstream of the compressor and the charging air pressure downstream of the compressor, and
b) a second correction factor (18) is used that is determined depending on an expansion ratio (16) of a turbine of the exhaust gas turbocharger, wherein the expansion ratio is given by the ratio of the exhaust gas pressure upstream of the turbine and the outlet pressure of the turbine.

2. Method according to Claim 1, **characterized in that,**
(a) for pulsation correction of the output signal (1) of the air mass sensor (24) a raw air mass signal (7) is determined (S1) from the output signal (1) of the air mass sensor (S1) and then the determined raw air mass signal is corrected (S2) for pulsation effects using the first correction factor; and
(b) the first correction factor (10) is determined depending on the raw air mass signal (7) and on the compression ratio (8) of the compressor and is stored in a first pulsation correction characteristic field (9) that has the raw air mass signal (7) as a first input variable and the compression ratio (8) of the compressor as a second input variable.

3. Method according to Claim 2, **characterized in that** the second correction factor (18) is determined depending on an exhaust gas mass flow (14) and an expansion ratio (16) of the turbine of the exhaust gas turbocharger and is stored in a second pulsation correction characteristic field (17) that has the exhaust gas mass flow (14) as a first input variable and the expansion ratio (16) of the turbine of the exhaust gas turbocharger as a second input variable.

4. Method according to Claim 3, **characterized in that** the exhaust gas mass flow (14) is calculated from the raw air mass signal (7) and a current fuel injection quantity (13) of the internal combustion engine.

5. Method according to Claim 1, **characterized in that,**
(a) for pulsation correction the output signal (1) of the air mass sensor (24) is corrected (S2) using the first correction factor and the corrected output signal is then converted into a raw air mass signal; and
(b) the first correction factor is stored in a third pulsation correction characteristic field that has the electrical output signal of the air mass sensor (24) as a first input variable and the compression ratio (8) of the compressor of the exhaust gas turbocharger as a second input variable.

6. Method according to any one of the preceding claims, **characterized in that** the first correction factor (10) is a multiplicative correction factor.

7. Method according to any one of the preceding claims, **characterized in that** the second correction factor (18) a multiplicative correction factor is.

8. Method according to any one of the preceding claims, **characterized in that** for pulsation correction
(a) a compressor correction factor (8a) is used, whose value is determined depending on a current compressor operating state in order to take into account influences of the compressor operating state on the pulsation that are not the result of the compression ratio; and/or
(b) a turbine correction factor (16a) is used whose value is determined depending on a temperature of the exhaust gas mass flow and/or depending on an opening state of a turbine of the exhaust gas turbocharger if the turbine geometry is variably adjustable.

9. Apparatus (22) for pulsation correction of an output signal (1) of an air mass sensor (24) for air mass detection of the combustion air of a supercharged internal combustion engine, wherein the apparatus (22) is arranged to receive an output signal (1) of the air mass sensor, **characterized in that** the apparatus is arranged to perform the method according to any one of Claims 1 to 8 for correction of the output signal (1) for pulsation effects.

10. Motor vehicle, in particular commercial vehicle, comprising a supercharged internal combustion engine and an apparatus (22) according to Claim 9.

## Revendications

1. Procédé de correction des pulsations d'un signal de sortie (1) d'un capteur de masse d'air (24) destiné à détecter la masse d'air de l'air de combustion d'un moteur à combustion interne suralimenté, **caractérisé en ce que** pour corriger les effets des pulsations sur le signal de sortie (1) du capteur de masse d'air (24),
a) un premier facteur de correction (10) est utilisé, lequel est déterminé en fonction d'un taux de compression (8) d'un compresseur d'un turbocompresseur, le taux de compression (8) résultant du rapport entre la pression d'aspiration avant le compresseur et la pression d'air de suralimentation après le compresseur, et
b) un deuxième facteur de correction (18) est utilisé, lequel est déterminé en fonction d'un taux d'expansion (16) d'une turbine du turbocompresseur, le taux d'expansion résultant du rapport entre la pression des gaz d'échappement avant la turbine et la pression de sortie de la turbine.

2. Procédé selon la revendication 1, **caractérisé**
(a) **en ce que** pour la correction des pulsations du signal de sortie (1) du capteur de masse d'air (24), un signal brut de masse d'air (7) est défini (S1) à partir du signal de sortie (1) du capteur de masse d'air (S1) et les effets des pulsations sur le signal brut de masse d'air défini sont ensuite corrigés en utilisant le premier facteur de correction (S2) ; et
(b) **en ce que** le premier facteur de correction (10) est déterminé en fonction du signal brut de masse d'air (7) et du taux de compression (8) du compresseur, puis déposé dans un premier diagramme caractéristique de correction des pulsations (9) dont la première grandeur d'entrée est le signal brut de masse d'air (7) et la deuxième grandeur d'entrée est le taux de compression (8) du compresseur.

3. Procédé selon la revendication 2, **caractérisé en ce que** le deuxième facteur de correction (18) est déterminé en fonction d'un débit massique des gaz d'échappement (14) et d'un taux d'expansion (16) de la turbine du turbocompresseur, puis déposé dans un deuxième diagramme caractéristique de correction des pulsations (17) dont la première grandeur d'entrée est le débit massique des gaz d'échappement (14) et la deuxième grandeur d'entrée est le taux d'expansion (16) de la turbine du turbocompresseur.

4. Procédé selon la revendication 3, **caractérisé en ce que** le débit massique des gaz d'échappement (14) est calculé à partir du signal brut de masse d'air (7) et d'une quantité de carburant injectée (13) actuelle du moteur à combustion interne.

5. Procédé selon la revendication 1, **caractérisé**
(a) **en ce que** pour la correction des pulsations, le signal de sortie (1) du capteur de masse d'air (24) est corrigé en utilisant le premier facteur de correction (S2) et le signal de sortie corrigé est ensuite converti en un signal brut de masse d'air ; et
(b) **en ce que** le premier facteur de correction est déposé dans un troisième diagramme caractéristique de correction des pulsations dont la première grandeur d'entrée est le signal de sortie électrique du capteur de masse d'air (24) et la deuxième grandeur d'entrée est le taux de compression (8) du compresseur du turbocompresseur.

6. Procédé selon l'une des revendications précédentes, **caractérisé en ce que** le premier facteur de correction (10) est un facteur de correction multiplicateur.

7. Procédé selon l'une des revendications précédentes, **caractérisé en ce que** le deuxième facteur de correction (18) est un facteur de correction multiplicateur.

8. Procédé selon l'une des revendications précédentes, **caractérisé en ce que** pour la correction des pulsations,
(a) un facteur de correction de compresseur (8a) est utilisé, dont la valeur est fixée en fonction d'un état de fonctionnement de compresseur actuel afin de tenir compte des influences de l'état de fonctionnement de compresseur sur la pulsation, lesquelles ne proviennent pas du taux de compression ; et/ou
(b) un facteur de correction de turbine (16a) est utilisé, dont la valeur est fixée en fonction d'une température du débit massique des gaz d'échappement et/ou en fonction d'un état d'ouverture d'une turbine du turbocompresseur dans le cas où la géométrie de la turbine peut être réglée de façon variable.

9. Dispositif (22) de correction des pulsations d'un signal de sortie (1) d'un capteur de masse d'air (24) destiné à détecter la masse d'air de l'air de combustion d'un moteur à combustion interne suralimenté, le dispositif (22) étant conçu pour recevoir un signal de sortie (1) du capteur de masse d'air, **caractérisé en ce que** le dispositif de correction des effets des pulsations sur le signal de sortie (1) est conçu pour mettre en oeuvre le procédé selon l'une des revendications 1 à 8.

10. Véhicule automobile, notamment véhicule utilitaire, possédant un moteur à combustion interne suralimenté et un dispositif (22) selon la revendication 9.
